# DEMANDE DE BREVET EUROPEEN

(11) **EP 1 653 580 A1**
(43) Date de publication de la demande: **03.05.2006**
(21) Numéro de dépôt: 05292320.8
(22) Date de dépôt: 02.11.2005
(51) Int. Cl.: H02B 1/044, H02G 5/00

(54) **Ensemble conducteur d'électricité et dispositif électrique raccordé sur un tel ensemble**

(30) Priorité: 02.11.2004 FR 0411663
(71) Demandeur: FCI Expansion 2, 78000 Versailles (FR)
(72) Inventeur: Charrier, Francois, 25300 Pontarlier (FR); Bisson, Didier, 25300 Doubs (FR)
(74) Mandataire: Domenego, Bertrand

(57) **Abrégé**

Cet ensemble conducteur d'électricité comprend un conducteur électrique (3) en forme de plaque présentant une première surface (4) et une deuxième surface (5), et comportant un orifice (8) traversant le conducteur entre ces surfaces, et des première et deuxième entretoises (22, 13) en appui sur la première surface (4) et la deuxième surface (5) à la périphérie de l'orifice (8).

L'ensemble comprend des moyens de centrage (14) pour centrer et immobiliser les première et deuxième entretoises (22, 13) radialement par rapport à l'orifice (8).

Application à la réalisation de circuits électriques d'alimentation, notamment pour trains ou véhicules automobiles.

## Description

La présente invention concerne un ensemble conducteur d'électricité du type comprenant :
- un conducteur électrique en forme de plaque présentant une première surface et une deuxième surface, et comportant un orifice traversant le conducteur entre ces surfaces suivant un axe,
- une première entretoise en appui sur la première surface à la périphérie de l'orifice, et
- une deuxième entretoise en appui sur la deuxième surface à la périphérie de l'orifice.

De tels conducteurs sont utilisés notamment dans des systèmes de raccordement électrique de puissance, par exemple pour l'alimentation électrique de véhicules automobiles à propulsion électrique ou de véhicules ferroviaires.

Ces systèmes comprennent plusieurs ensembles conducteurs du type précité, disposés à proximité les uns des autres. Les orifices servent au raccordement et à la fixation de bornes de composants électriques sur les différents conducteurs.

Les conducteurs sont en fonctionnement portés à des potentiels différents. Des isolants recouvrant les surfaces des conducteurs permettent d'éviter la formation d'arcs électriques entre les conducteurs.

Les isolants sont généralement munis d'ouvertures au droit des orifices. Afin de fournir une surface de contact électrique entre les conducteurs et les composants, les ouvertures d'un isolant sont plus étendues que les orifices correspondants d'un conducteur et laissent sur la surface du conducteur une zone d'appui découverte entre l'orifice et l'isolant.

Le document EP -A1- 0 993 083 décrit un ensemble conducteur du type précité.

Au montage, il peut arriver qu'une entretoise vienne porter sur le bord de l'isolant à la périphérie d'une zone d'appui.

Pour éviter ce risque, une solution consiste à prévoir des zones d'appui découvertes très étendues et présentant un diamètre extérieur bien supérieur à celui des entretoises.

Néanmoins, plus les zones d'appui découvertes sont étendues, plus le risque de formation d'arcs électriques entre les conducteurs augmente.

Un but de la présente invention est de proposer un ensemble conducteur d'électricité permettant de limiter les risques de formation d'arcs électriques.

A cet effet, l'invention propose un ensemble conducteur d'électricité du type précité, caractérisé en ce qu'il comprend des moyens de centrage pour centrer et immobiliser les première et deuxième entretoises radialement par rapport à l'orifice.

Selon d'autres modes de réalisation, l'ensemble conducteur d'électricité comprend une ou plusieurs des caractéristiques suivantes, prise(s) isolément ou selon toutes les combinaisons techniquement possibles :
- les moyens de centrage comprennent une portion de la deuxième entretoise faisant saillie de l'orifice du côté de la première surface, la première entretoise étant engagée sur ladite portion ;
- la première entretoise est enfilée sur une surface extérieure de ladite portion ;
- la première entretoise est emmanchée à force sur ladite portion ;
- la portion est en complémentarité de forme avec l'orifice et traverse l'orifice pour permettre le centrage de la deuxième entretoise par rapport à l'orifice ;
- la portion de la deuxième entretoise est emmanchée à force dans l'orifice ;
- le conducteur, la deuxième entretoise et la première entretoise forment un ensemble solidaire ;
- il comprend au moins un isolant recouvrant une surface du conducteur, l'isolant présentant une ouverture au droit de l'orifice et ménageant une zone d'appui découverte entre l'orifice et l'isolant, l'entretoise en appui sur la surface venant en appui sur cette zone d'appui découverte ;
- l'ouverture présente un diamètre sensiblement égal ou supérieur au diamètre de l'entretoise ;
- les moyens de centrage permettent d'immobiliser les entretoises en rotation autour de l'axe, l'une par rapport à l'autre et par rapport à l'orifice ;
- le couple maximal de résistance à la rotation des moyens de centrage des entretoises est supérieur à 15 N.m.

L'invention concerne également un dispositif électrique comprenant un ensemble tel que défini ci-dessus, et un tirant traversant axialement les entretoises, une rondelle d'appui maintenue en appui sur l'une de la première ou la deuxième entretoise par le tirant, et un composant électrique maintenu an appui sur l'autre de la première ou la deuxième entretoise.

L'invention concerne encore un système de raccordement électrique comprenant une pluralité d'ensembles conducteurs d'électricité tels que définis ci-dessus.

L'invention sera mieux comprise à la lecture de la description qui va suivre, donnée uniquement à titre d'exemple, et faite en se référant aux dessins annexés, sur lesquels :
- la figure 1 est une vue en perspective d'un système de raccordement électrique comprenant plusieurs ensembles conducteurs superposés ;
- la figure 2 est une vue en coupe d'un ensemble conducteur du système de raccordement ;
- la figure 3 est une vue en coupe partielle selon III-III du système de raccordement montrant plusieurs ensembles conducteurs superposés;
- la figure 4 est une vue analogue à la figure 2, avec un composant électrique fixé sur l'ensemble conducteur selon une première variante ; et
- la figure 5 est une figure analogue à la figure 2, avec un composant électrique fixé sur l'ensemble conducteur selon une deuxième variante.

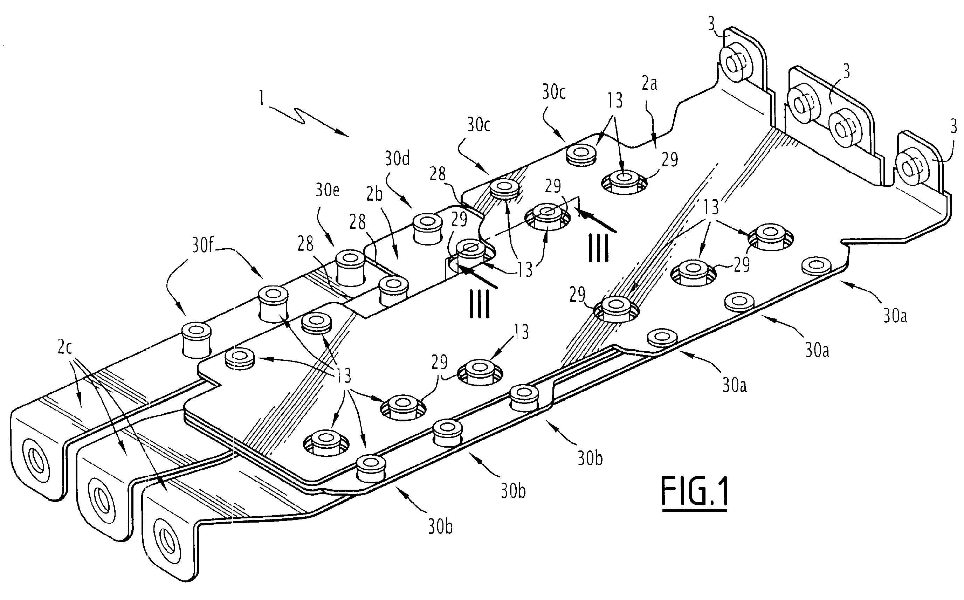

Tel que représenté sur la figure 1, un système de raccordement électrique 1 comprend plusieurs ensembles conducteurs d'électricité 2a, 2b, 2c, du type barre d'alimentation. Ces ensembles conducteurs 2a, 2b, 2c sont tous en forme de plaque, et superposés.

Le système de raccordement électrique 1 s'applique à la réalisation de circuits électriques, par exemple pour l'alimentation en énergie électrique de dispositifs tels que des véhicules ferroviaires ou des véhicules automobiles. De manière plus générale, le système de raccordement électrique s'applique à tout système de transmission d'énergie électrique.

Plus précisément, le système 1 comprend un ensemble conducteur supérieur 2a, un ensemble conducteur intermédiaire 2b disposé sous l'ensemble conducteur supérieur 2a, et trois ensembles conducteurs inférieurs 2c disposés dans un même plan, sous l'ensemble conducteur intermédiaire 2b.

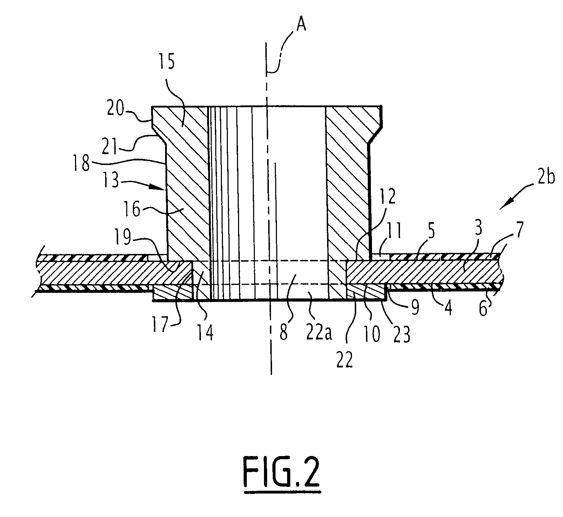

Les ensembles conducteurs d'électricité 2a, 2b, 2c possèdent des structures identiques. Seule la structure d'un ensemble conducteur intermédiaire 2b est décrite en détail ci-dessous, en référence à la figure 2.

L'ensemble conducteur intermédiaire 2b comprend un conducteur 3 en forme de plaque dont une première surface 4 et deuxième surface 5 opposées sont recouvertes par des films isolants 6, 7.

L'ensemble de conducteur intermédiaire 2b est muni de moyens de raccordement électrique pour des composants électriques.

A cet effet, le conducteur 3 présente un orifice 8 traversant le conducteur 3 et débouchant au niveau de la première surface 4 et de la deuxième surface 5.

Le premier isolant 6 est pourvu d'une ouverture 9 située au droit de l'orifice 8. En d'autres termes, l'ouverture 9 est centrée avec l'orifice 8. L'ouverture 9 est plus étendue que l'orifice 8 et laisse une première zone annulaire d'appui 10 découverte sur la première surface 4, entre l'orifice 8 et l'isolant 6.

Le deuxième isolant 7 est pourvu d'une ouverture 11 également centrée sur l'orifice 8. L'ouverture 11 est plus étendue que l'orifice 8 et laisse sur la deuxième surface 5 une deuxième zone annulaire d'appui 12 découverte entre l'orifice 8 et le deuxième isolant 7.

Une colonnette ou connecteur 13 est fixé dans l'orifice 8. Le connecteur 13, de forme générale tubulaire cylindrique, présente une première extrémité axiale 14 reçue dans l'orifice 8 et une seconde extrémité axiale 15 opposée. Le connecteur 13 présente une portion médiane 16 axialement entre la première extrémité 14 et la deuxième extrémité 15. La portion médiane 16 et la deuxième extrémité 15 font saillie sur le plan de l'ensemble conducteur 2b du côté de la deuxième surface 5.

Le connecteur 13 présente un alésage intérieur cylindrique lisse délimitant un passage axial dans le connecteur 13, et une surface extérieure cylindrique étagée.

Plus précisément, la première extrémité 14 présente une surface extérieure cylindrique 17 de diamètre inférieur à celui de la surface extérieure 18 de la portion médiane 16, et un épaulement radial 19 relie ces surfaces extérieures 17, 18. Par ailleurs, la deuxième extrémité 15 présente une surface extérieure 20 de diamètre supérieur à celui de la surface extérieure 18 de la portion médiane 16, et ces surfaces extérieures 20, 18 sont reliées par un épaulement tronconique 21 s'évasant du côté de la deuxième extrémité 15.

La surface extérieure 17 de la première extrémité 14 est en complémentarité de forme avec l'orifice 8. La première extrémité 14 est enfoncée à force dans l'orifice 8 du conducteur 3 du côté de la deuxième surface 5, l'épaulement radial 19 se situant en appui axial sur la deuxième zone d'appui 12 de la deuxième surface 5. La première extrémité 14 du connecteur 13 constitue un moyen de centrage du connecteur 13 relativement à l'orifice 8.

La deuxième zone d'appui 12 présente un diamètre extérieur supérieur au diamètre extérieur de la surface extérieure 18 de la portion médiane 16 du connecteur 13. Par conséquent, l'épaulement radial 19 ne vient pas en appui sur le deuxième isolant 7 et ne risque par de l'endommager.

La première extrémité 14 du connecteur 13 est plus étendue axialement que l'orifice 8, de sorte qu'une partie distale de la première extrémité 14 fait saillie de l'orifice 8 du côté de la première surface 4 du conducteur 3.

Une entretoise annulaire 22 est enfilée sur la surface extérieure 17 de la partie saillante de la première extrémité 14, et se situe en appui sur la première zone d'appui 10. L'entretoise 22 est plus épaisse que l'isolant 6 et forme du côté opposé au conducteur 3 une zone annulaire d'appui 23 surélevée par rapport à l'isolant 6.

L'entretoise 22 présente un trou central 22a. L'entretoise 22 est emmanchée à force sur la surface extérieure 17 de la partie saillante de la première extrémité 14.

La partie saillante de la première extrémité 14 et l'entretoise 22 présentent la même dimension axiale, de sorte que la première extrémité 14 ne fait pas saillie de la zone d'appui surélevée 23, mais affleure cette dernière.

La première extrémité 14 et le trou central 22a constituent des moyens de centrage complémentaires entre l'entretoise 22 et le connecteur 13. L'entretoise 22 est centrée sur le connecteur 13, et par conséquent par rapport à l'orifice 8 puisque le connecteur 13 est centré sur l'orifice 8. L'entretoise 22 est donc immobilisée et ne peut se déplacer radialement par rapport à l'axe principal A de l'orifice 8.

Le connecteur 13, le conducteur 3 et l'entretoise 22 forment un ensemble solidaire. Ceci évite que l'entretoise 22 et le connecteur 13 ne s'échappent ou ne soit retirés par un opérateur.

Le connecteur 13 forme une deuxième entretoise plus haute que l'entretoise 22.

En revenant à la figure 1, les ensembles conducteurs d'électricité 2a, 2b, 2c sont tous munis d'une pluralité de connecteurs 13 tels que décrits précédemment. Les connecteurs 13 des différents ensembles conducteurs d'électricité 2a, 2b, 2c s'étendent tous dans la même direction, vers le haut sur la figure 1. En variante, les connecteurs 13 s'étendent dans des directions différentes, par exemple des directions opposées.

L'ensemble conducteur supérieur 2a et l'ensemble conducteur intermédiaire 2b sont tous deux formés de façon à permettre le passage des connecteurs 13 portés par les ensembles conducteurs 2b, 2c qu'ils recouvrent.

A cet effet, l'ensemble conducteur supérieur 2a et l'ensemble conducteur intermédiaire 2b sont chacun munis de bords découpés 28 et de trous 29.

Les connecteurs 13 sont agencés en quatre rangées parallèles de six connecteurs 13, définissant douze paires de connecteurs 13. Les deux connecteurs 13 de chaque paire sont fixés sur des ensembles conducteurs 2a, 2b, 2c différents pour relier des composants électriques du type dipôles entre ces deux ensembles conducteurs 2a, 2b, 2c considérés.

Dans l'exemple illustré, trois paires 30a permettent la connexion entre l'ensemble conducteur supérieur 2a et un premier ensemble conducteur inférieur 2c, trois paires 30b permettent la connexion entre l'ensemble conducteur intermédiaire 2a et le premier ensemble conducteur inférieur 2c, deux paires 30c permettent la connexion entre l'ensemble conducteur supérieur 2a et un deuxième ensemble conducteur inférieur 2c, une paire 30d permet la connexion entre l'ensemble conducteur intermédiaire 2b et le deuxième ensemble conducteur inférieur 2c, une paire 30e permet la connexion entre l'ensemble conducteur intermédiaire 2b et un troisième ensemble conducteur inférieur 2c, et deux paires 30f permettent la connexion entre l'ensemble conducteur supérieur 2a et le troisième ensemble conducteur inférieur 2c.

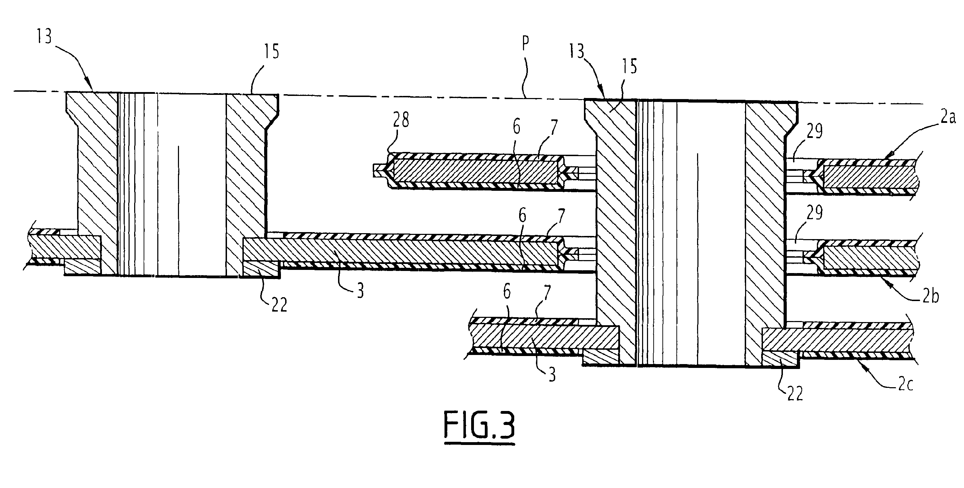

Les connecteurs 13 possèdent des longueurs axiales différentes selon qu'ils sont portés par l'ensemble conducteur supérieur 2a, l'ensemble conducteur intermédiaire 2b, ou un des ensembles conducteurs inférieurs 2c, de façon que les deuxièmes extrémités 15 des connecteurs 13 se situent dans un même plan P (figure 3), situé au-dessus du niveau de l'ensemble conducteur supérieur 2a.

Tel que représenté sur la figure 3, un premier connecteur 13 porté par l'ensemble conducteur intermédiaire 2b traverse un dégagement ménagé par un bord découpé 28 de l'ensemble conducteur supérieur 2a.

Un deuxième connecteur 13 porté par un ensemble conducteur inférieur 2c traverse des trous 29 alignés ménagés dans l'ensemble conducteur intermédiaire 2b et l'ensemble conducteur supérieur 2a.

Les deuxièmes extrémités 15 des connecteurs 13 se situent dans le même plan, matérialisé par un trait mixte P sur la figure 3.

Comme cela est visible sur la figure 3, les isolants 6, 7 de chaque ensemble conducteur 2a, 2b, 2c se rejoignent au niveau des bords 28 et à travers les trous 29 pour enrober et ce faisant isoler chaque conducteur.

En se référant à la figure 2, l'entretoise 22 associée à l'orifice 8 étant immobile radialement, le premier isolant 6 peut présenter une ouverture 9 de diamètre sensiblement égal au diamètre extérieur de l'entretoise 22 en étant légèrement supérieur, et venir recouvrir la première surface 4 du conducteur 3 au plus près de l'entretoise 22 afin d'assurer une isolation électrique efficace, limitant le risque de formation d'arc électrique entre le conducteur 3 et un autre conducteur.

En particulier, ce recouvrement évite l'apparition d'arcs électriques dits de cheminement se propageant sur la surface externe des isolants, suivant des lignes de cheminement, entre les éléments conducteurs découverts. En effet, plus l'isolant 6 se termine à proximité de l'entretoise 22, plus une ligne de cheminement menant d'un conducteur distant au conducteur 3 le long de l'isolant 6 et à travers l'orifice 9 sera longue, et plus la formation d'un arc électrique de cheminement correspondant sera rendue difficile.

En fonctionnement, le courant électrique circule dans le conducteur 3 jusqu'aux orifices 8, puis passe par l'entretoise 22 ou le connecteur 13 associé à l'orifice vers un composant électrique en fonction de la façon dont le composant est fixé sur le connecteur 13.

Une borne d'un composant électrique peut être fixée de différentes façons sur un connecteur 13. Deux modes de fixation d'un composant sur un connecteur 13 de l'ensemble conducteur intermédiaire 2b sont décrits ci-dessous.

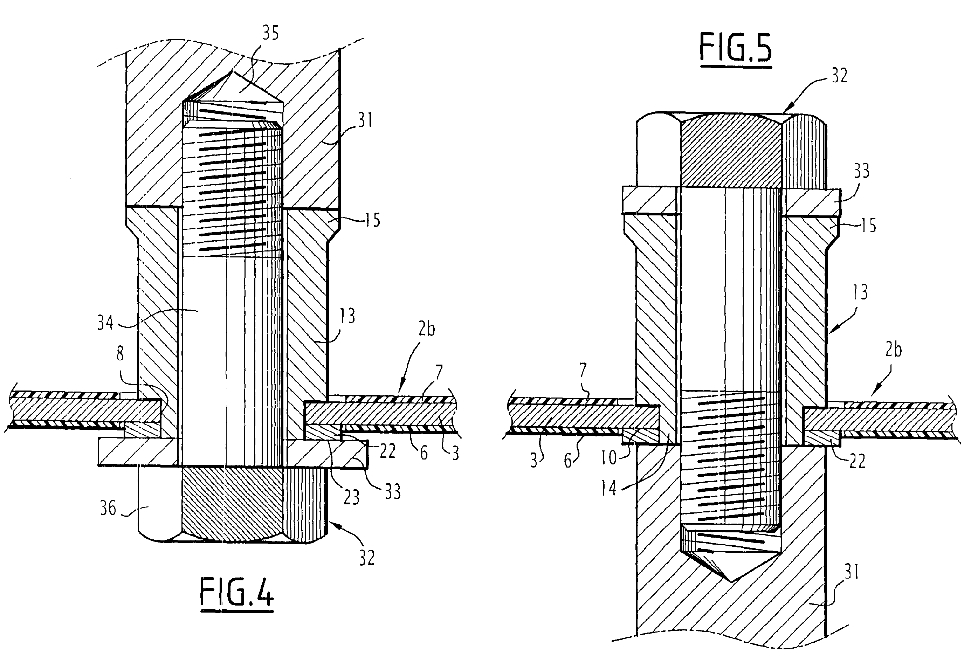

Comme illustré sur la figure 4, selon un premier mode de fixation, un composant électrique 31, dont seule une borne de connexion est visible, est fixé sur le connecteur 13 au moyen d'organes de fixation comprenant une vis 32 et une rondelle d'appui 33.

Le composant 31 est en appui sur la deuxième extrémité 15 du connecteur 13. La vis 32 comprend une tige 34 traversant l'alésage du connecteur 13, une extrémité libre de la vis 32 venant se visser dans un trou taraudé 35 du composant 31. Du côté du connecteur 13 opposé au composant 31, la vis 32 comprend une tête 36. La rondelle 33 est enfilée sur la tige 34, axialement entre la tête 36 et l'entretoise 22.

Lors du serrage de la vis 32, la tête 36 vient en appui par l'intermédiaire de la rondelle 33 sur la zone d'appui surélevée 23 de l'entretoise 22. La rondelle 33 prenant appui sur l'entretoise 22 ne risque pas de venir en appui sur le premier isolant 6, ni de l'endommager.

Dans ce mode de fixation, le courant est transmis du conducteur 3 vers le composant 31 essentiellement par le connecteur 13.

Tel qu'illustré sur la figure 4, il est possible de prévoir une entretoise 22 de diamètre inférieure à celui de la rondelle 33, et par conséquent d'obtenir un recouvrement plus important du conducteur 3 par l'isolant 6.

Sur la figure 5, selon un deuxième mode de fixation, la vis 32 et la rondelle 33 d'une part, et le composant 31, d'autre part, sont inversés. En d'autres termes le composant 31 est disposé du côté de la première extrémité 14 du connecteur, en appui sur la zone d'appui 23 de l'entretoise 22, et la vis 32 et la rondelle 33 sont disposées du côté de la deuxième extrémité 15, en appui sur cette extrémité 15.

Dans ce cas, le courant électrique est transmis du conducteur 3 au composant 31 directement par l'entretoise 22. On prévoit donc une entretoise 22 en matériau conducteur d'électricité, par exemple en matériau métallique.

Dans le mode de réalisation illustré, l'entretoise 22, enfoncée à force sur le connecteur 13 lui-même enfoncé à force dans l'orifice 8, est solidaire en rotation du conducteur 3. Ceci évite que, lors du serrage d'une vis 32, l'entretoise 22 ou le connecteur 13 ne soit déplacé en rotation par rapport au conducteur 3 sur lequel elle est en appui.

En effet, un déplacement en rotation pourrait détériorer les surfaces en contact du conducteur 3 et de l'entretoise 22, et nuire à l'obtention d'un contact à faible résistance électrique.

De préférence, les ajustements entre le connecteur 13 et le conducteur 3 et entre l'entretoise 22 et le connecteur 13 sont tels que le couple devant être exercé sur l'entretoise 22 ou le connecteur 13 pour déplacer l'un et/ou l'autre en rotation autour de l'axe A est supérieur à 15 N.m. Ceci évite la rotation de l'entretoise 22 et/ou du connecteur 13, notamment dans des applications dans lesquelles l'entretoise 22 ou le connecteur 13 présentent un diamètre extérieur d'environ 20 mm.

Dans une variante permettant d'améliorer l'immobilisation en rotation, l'orifice 8 et le connecteur 13 et/ou l'entretoise 22 et le connecteur 13 présentent des reliefs radiaux complémentaires. Par exemple, le connecteur 13 comprend des languettes s'étendant axialement et formant entre elles des creux, et l'orifice 8 comprend des saillies s'étendant radialement vers l'intérieur dans les creux.

Les connecteurs 13 peuvent être répartis pour la réalisation de schéma électriques quelconques. En particulier, des connecteurs 13 peuvent être associés par trois pour la connexion de composants électriques à trois pôles, tels que des transistors.

## Revendications

1. Ensemble conducteur d'électricité du type comprenant :
- un conducteur électrique (3) en forme de plaque présentant une première surface (4) et une deuxième surface (5), et comportant un orifice (8) traversant le conducteur entre ces surfaces (4, 5) suivant un axe (A) ;
- une première entretoise (22) en appui sur la première surface (4) à la périphérie de l'orifice (8), et
- une deuxième entretoise (13) en appui sur la deuxième surface (5) à la périphérie de l'orifice (8),
**caractérisé en ce qu'**il comprend des moyens de centrage pour centrer et immobiliser les première et deuxième entretoises (22, 13) radialement par rapport à l'orifice (8).

2. Ensemble selon la revendication 1, **caractérisé en ce que** les moyens de centrage comprennent une portion (14) de la deuxième entretoise (13) faisant saillie de l'orifice (8) du côté de la première surface (4), la première entretoise (22) étant engagée sur ladite portion (14).

3. Ensemble selon la revendication 2, dans lequel la première entretoise (22) est enfilée sur une surface extérieure de ladite portion (14).

4. Ensemble selon l'une des revendications 2 ou 3, dans lequel la première entretoise (22) est emmanchée à force sur ladite portion (14).

5. Ensemble selon l'une des revendications 2 à 4, dans lequel la portion (14) est en complémentarité de forme avec l'orifice (8) et traverse l'orifice (8) pour permettre le centrage de la deuxième entretoise (13) par rapport à l'orifice (8).

6. Ensemble selon la revendication 5, dans lequel la portion (14) de la deuxième entretoise (13) est emmanchée à force dans l'orifice (8).

7. Ensemble selon l'une des revendications précédentes, dans lequel le conducteur (3), la deuxième entretoise (13) et la première entretoise (22) forment un ensemble solidaire.

8. Ensemble selon l'une des revendications précédentes, comprenant au moins un isolant (6, 7) recouvrant une surface (4, 5) du conducteur (3), l'isolant (6, 7) présentant une ouverture (9, 11) au droit de l'orifice (8) et ménageant une zone d'appui découverte (10, 12) entre l'orifice (8) et l'isolant (6, 7), l'entretoise (13, 22) en appui sur la surface (4, 5) venant en appui sur cette zone d'appui découverte (10, 12).

9. Ensemble selon la revendication 8, dans lequel l'ouverture (9, 11) présente un diamètre sensiblement égal ou supérieur au diamètre de l'entretoise (13, 22).

10. Ensemble selon l'une quelconque des revendications précédentes, dans lequel les moyens de centrage (14, 22a) permettent d'immobiliser les entretoises (13, 22) en rotation autour de l'axe (A), l'une par rapport à l'autre et par rapport à l'orifice (8).

11. Ensemble selon la revendication 10, dans lequel le couple maximal de résistance à la rotation des moyens de centrage (14, 22a) des entretoises (13, 22) est supérieur à 15 N.m.

12. Dispositif électrique, comprenant un ensemble selon l'une quelconque des revendications précédentes, et un tirant (34) traversant axialement les entretoises (13, 22), une rondelle d'appui (33) maintenue en appui sur l'une de la première (22) ou la deuxième (13) entretoise par le tirant (34), et un composant électrique maintenu an appui sur l'autre de la première (22) ou la deuxième (13) entretoise.

13. Système de raccordement électrique, comprenant une pluralité d'ensembles conducteurs d'électricité (2) selon l'une quelconque des revendications 1 à 11.
